# EUROPÄISCHE PATENTANMELDUNG

(11) **EP 2 835 610 A1**
(43) Veröffentlichungstag der Anmeldung: **11.02.2015**
(21) Anmeldenummer: 13179322.6
(22) Anmeldetag: 05.08.2013
(51) Int. Cl.: F28D 20/00

(54) **Modul für einen thermischen Speicherbehälter**

(71) Anmelder: FSAVE Solartechnik GmbH, 34117 Kassel (DE)
(72) Erfinder: Wilhelms, Claudius, 34125 Kassel (DE); Kappmeyer, Ralf, 34119 Kassel (DE); Heinzen, Roland, 33100 Paderborn (DE); Zaß, Katrin, 34121 Kassel (DE)
(74) Vertreter: REHBERG HÜPPE + PARTNER

(57) **Zusammenfassung**

Die Erfindung betrifft einen Speicherbehälter (1), insbesondere für ein thermisches Fluid einer Solaranlage.

Erfindungsgemäß ist der Speicherbehälter (1) mit Modulen (2a, 2b) ausgebildet. Zur Versteifung des Speicherbehälters (1) gegenüber einem Ausbeulen oder einem Ausknicken ist in Kopplungsbereichen (7a, 6b) zwischen benachbarten Modulen (2a, 2b) mindestens ein Versteifungselement (52) angeordnet. Eine Befestigung einerseits der Kopplungsbereiche (7a, 6b) aneinander und andererseits des Versteifungselements (52) an den Kopplungsbereichen (7a, 6b) kann stoffschlüssig, mittels Schweißen oder über eine Verschraubung erfolgen. Eine Anpress- oder Fügekraft in den Kopplungsbereichen (7a, 6b) kann über Beschwerungstaschen erfolgen. Vorgeschlagen wird auch, zwischen den Kopplungsbereichen (7a, 6b) eine Schweißstange einzusetzen, deren thermoplastischer Kunststoff bei Anlegen einer elektrischen Spannung verflüssigt wird.

## Beschreibung

### TECHNISCHES GEBIET DER ERFINDUNG

Die Erfindung betrifft ein Modul für einen Speicherbehälter, in welchem ein Fluid temporär oder permanent bevorratet wird. Vorzugsweise handelt es sich um einen thermischen Speicherbehälter, in welchem thermische Energie in dem Fluid gespeichert werden soll. Beispielsweise dient der thermische Speicherbehälter zur Speicherung von Warmwasser bei einer Solaranlage. Die Erfindung betrifft auch einen Speicherbehälter, welcher mit einem Modul gebildet ist. Schließlich betrifft die Erfindung ein Verfahren zur Montage eines Speicherbehälters aus mehreren Modulen und eine neuartige Verwendung eines Schweißelements.

### STAND DER TECHNIK

Eine Einbringung großvolumiger Speicherbehälter in Gebäude oder auch in andere Behältnisse gestaltet sich als schwierig, wenn ein gewisses Volumen des Speicherbehälters überschritten wird. Beispielsweise sind zylindrische Stahlpufferspeicherbehälter auf ein Volumen von ca. 800 Liter begrenzt, wenn diese noch durch Türöffnungen und/oder über Treppen transportiert werden sollen. Grundsätzlich sind modulare Speicherbehälter aus dem Stand der Technik bekannt, welche einen demontierten Transport beispielsweise durch Türöffnungen und über Treppen ermöglichen und erst an ihrem Einsatzort montiert werden, so dass auch größere Volumina, beispielsweise von 800 bis 2.000 Liter, des Speicherbehälters möglich sind. Derartige modulartige Speicherbehälter gemäß dem Stand der Technik sind aber kostenintensiv, erfordern spezielles Know-how für die Montage und bergen das Risiko von Montagefehlern in sich.

Aus den Patentanmeldungen DE 10 2010 028 752 A1 sowie DE 10 2008 036 669 A1 der Anmelderin sind modulare Speicherbehälter bekannt, bei welchen plattenartige Wandmodule, ggf. mit einer fachwerkartigen Tragstruktur, erst an dem Einsatzort miteinander montiert werden.

DE 295 12 343 U1 offenbart einen thermischen Speicherbehälter mit Anwendung für Solaranlagen, Wärmerückgewinnungsanlagen oder Wärme-Pufferspeichern in Heizungsanlagen und Kraft-Wärme-Kopplungsanlagen. Hier sind die Module als für sich abgeschlossene Teilbehälter ausgebildet, die mit zwischengeordneten Dämmplatten aufeinander gestapelt sind. Die Teilbehälter sollen zur Fertigungsvereinfachung identisch gefertigt werden und können ohne besonderen Aufwand transportiert und durch übliche Türen in Räume eingebracht werden.

DE 102 16 175 C1 offenbart einen Behälter, welcher mit zwei Modulen gebildet ist, welche in einer Horizontalebene einen Kopplungsbereich ausbilden. Die beiden Module sind hierbei jeweils mit einem Innenmantel und einem Außenmantel ausgebildet und aus Kunststoff hergestellt. Eine Verbindung der beiden Module erfolgt durch ein Reibschweißverfahren, bei welchem der Energieeintrag in die zu verschweißenden Kopplungsbereiche über die Reibung zwischen den Kopplungsbereichen der Module infolge einer erzwungenen Relativbewegung derselben erfolgt.

### AUFGABE DER ERFINDUNG

Der Erfindung liegt die Aufgabe zugrunde, einen modularen (insbesondere thermischen) Speicherbehälter für ein Fluid vorzuschlagen, welcher insbesondere hinsichtlich der Fertigung, der einsetzbaren Materialien, der Montage, der Steifigkeit und der Kopplung benachbarter Module verbessert ist.

### LÖSUNG

Die Aufgabe der Erfindung wird erfindungsgemäß mit den Merkmalen des unabhängigen Patentanspruchs gelöst. Weitere bevorzugte erfindungsgemäße Ausgestaltungen sind den abhängigen Patentansprüchen zu entnehmen.

### BESCHREIBUNG DER ERFINDUNG

Erfindungsgemäß ist der Speicherbehälter mit mindestens zwei Modulen gebildet, welche beispielsweise separat gefertigt werden können und/oder separat an ihren Einbauort transportiert werden können, wo diese dann zu dem Speicherbehälter montiert werden. Die Module verfügen (im Gegensatz zu plattenförmigen Modulen) über eine in Umfangsrichtung geschlossene Wandung, wobei hiervon auch integrale Module mit geschlossener Wandung für einen Speicherbehälter mit nicht kreisförmigem Querschnitt, beispielsweise rechteckigem Querschnitt, umfasst sein sollen. Die Module sind mit mindestens einem Kopplungsbereich ausgestattet, im Bereich dessen diese mit einem benachbarten Modul koppelbar sind.

Auf einen Speicherbehälter der hier vorliegenden Art wirken beträchtliche Beanspruchungen. Hierbei kann es sich um externe Beanspruchungen handeln. Vor allem aber erfolgt eine Beanspruchung des Speicherbehälters durch ein darin angeordnetes Fluid, welches infolge des fluidischen Drucks zu einem "Ausbeulen" des Speicherbehälters führen kann oder, beispielsweise bei einem nicht exakt horizontalen Aufbau des Speicherbehälters, zu einem Ausknicken desselben. Die Gefahr unerwünschter Verformungen des Speicherbehälters, welche schlimmstenfalls zur Undichtigkeit desselben führen können, steigt mit Verringerung der Wandstärke des Speicherbehälters und/oder Verringerung der Festigkeit des für den Speicherbehälter verwendeten Materials. Zur Vermeidung dieser unerwünschten Verformungen sind aus dem Stand der Technik Versteifungsmaßnahmen bekannt, welche darin bestehen, dass eine vertikale Wandung des Speicherbehälters von einem insbesondere metallischen versteifenden Ring umschlossen wird, welcher über einen Spannmechanismus gegen die Mantelfläche der Wandung verspannt wird.

Erfindungsgemäß erfolgt eine alternative (oder kumulative) Versteifung des Speicherbehälters dadurch, dass im Kopplungsbereich der benachbarten Module ein Versteifungselement angeordnet ist. Gegenüber den bekannten Spannringen stützt sich somit erfindungsgemäß das Versteifungselement nicht im Wandungsbereich, sondern vielmehr im Kopplungsbereich ab, wozu das Versteifungselement vorzugsweise unmittelbar an mindestens einem Kopplungsbereich anliegt. Andererseits erstreckt sich das Versteifungselement über einen Teilumfang des Kopplungsbereichs, wodurch die Montage des Versteifungselements mit mindestens einem Modul in nicht montiertem Zustand oder mit dem Speicherbehälter mit vormontierten Modulen vereinfacht werden kann.

Durchaus möglich ist, dass lediglich ein oder mehrere Versteifungselemente in Teilumfangsbereichen angeordnet ist/sind, während in anderen Teilumfangsbereichen kein Versteifungselement angeordnet ist. In bevorzugter Ausgestaltung der Erfindung schließen allerdings mehrere Versteifungselemente in Umfangsrichtung aneinander an, womit eine Versteifung über den gesamten Umfang erfolgen kann. Dieses Anschließen der Versteifungselemente aneinander kann beliebig erfolgen. So können die Versteifungselemente lose oder mit geringem Spalt aneinander anschließen, aneinander anliegen, einander überlappen, miteinander verbunden sein, miteinander verschraubt sein, stoffschlüssig miteinander verbunden sein und/oder einen Formschluss miteinander eingehen oder ineinander gesteckt sein.

Möglich ist, dass mehrere Versteifungselemente in unterschiedlichen Höhen des Speicherbehälters angeordnet sind, um eine Versteifung in unterschiedlichen Höhen zu bewirken. Hierbei können die Versteifungselemente in unterschiedlichen Höhen gleich oder unterschiedlich, insbesondere um den unterschiedlichen Beanspruchungen durch den fluidischen Druck in den unterschiedlichen Höhen Rechnung zu tragen, ausgebildet sein. Für eine Weiterbildung der Erfindung ist zusätzlich zu den Versteifungselementen, welche sich in Umfangsrichtung erstrecken, ein Vertikal-Versteifungselement vorgesehen. Über das Vertikal-Versteifungselement ist ein Versteifungselement zwischen einem ersten und einem zweiten Modul mit einem vertikal darüber oder darunter angeordneten Versteifungselement, welches beispielsweise das zweite Modul mit einem dritten Modul oder ein drittes Modul mit einem vierten Modul verbindet, verbunden. Auf diese Weise kann einerseits über die Versteifungselemente eine Erhöhung der Steifigkeit gegenüber einem "Ausbeulen" erfolgen, während über das Vertikal-Versteifungselement eine zusätzliche Versteifung gegen ein "Ausbeulen" und/oder gegen ein Verkippen oder seitliches Ausknicken des Speicherbehälters erfolgen kann.

Für die Gestaltung des Versteifungselements gibt es vielfältige Möglichkeiten. So kann dieses einen konstanten oder veränderlichen Querschnitt besitzen. Vorzugsweise ist das Versteifungselement mit einem T- oder U-förmigen Querschnitt ausgestattet. Einerseits ermöglicht ein derartiger T- oder U-förmiger Querschnitt eine hohe Steifigkeit des Versteifungselements bei verhältnismäßig niedrigem Materialeinsatz und Gewicht. Andererseits können die unterschiedlichen Schenkel des T oder U des T- oder U-förmigen Querschnitts multifunktional eingesetzt werden, indem diese genutzt werden, um eine Verbindung des Versteifungselements mit einem benachbarten Versteifungselement und/oder mindestens einem Kopplungsbereich eines Moduls zu gewährleisten. Möglich ist auch, dass über einen Schenkel des Versteifungselements eine Befestigung von Anbauteilen erfolgt oder auch eine Abstützung oder Befestigung des Speicherbehälters an einer Wand des Raums, in dem der Speicherbehälter aufgestellt werden soll, oder an benachbarten Bauelementen erfolgt.

In alternativer Ausgestaltung der Erfindung ist das Versteifungselement als Kreisringsegment ausgebildet.

Grundsätzlich möglich ist, dass sich ein Versteifungselement außerhalb des Behälters oder innerhalb des Behälters an mindestens einem Kopplungsbereich abstützt. In besonderer Ausgestaltung der Erfindung ist das Versteifungselement, insbesondere das Kreisringsegment oder ein Schenkel des T oder U zwischen den Kopplungsbereichen der benachbarten Module angeordnet. Anders gesagt liegt ein oberes Modul mit seinem Kopplungsbereich auf der Oberseite des Kreisringsegments oder des Schenkels an, während eine Oberseite des Kopplungsbereichs des darunter liegenden Moduls auf einer Unterseite des Kreisringsegments oder Schenkels anliegt. Hierdurch kann eine besonders kompakte Ausgestaltung geschaffen werden mit einer besonders guten Versteifung. Für die Verbindung der Module miteinander über die Kopplungsbereiche und der Kopplungsbereiche mit dem Versteifungselement gibt es hierbei vielfältige Möglichkeiten. Für eine Ausgestaltung der Erfindung ist das Versteifungselement mit mindestens einem Kopplungsbereich verschraubt. Vorzugsweise dient eine Verschraubung hierbei sowohl der Verbindung des Versteifungselements mit dem mindestens einen Kopplungsbereich und dem Verbinden der beiden benachbarten Module über deren Kopplungsbereiche.

Für eine besondere Ausgestaltung der Erfindung erfolgt ein Verschrauben eines Schenkels des T oder U mit mindestens einem Kopplungsbereich.

Für eine alternative oder kumulative Ausgestaltung der Erfindung ist das Versteifungselement mit mindestens einem Kopplungsbereich stoffschlüssig verbunden, was durch ein adhäsives Mittel oder mittels eines Schweißvorgangs erfolgen kann.

Die Gewährleistung der Dichtigkeit zwischen den beiden benachbarten Modulen kann durch die mittels der Verschraubung herbeigeführten Anpresskräfte, mittels der stoffschlüssigen Verbindung oder durch zusätzliche Dichtmaßnahmen wie Dichtscheiben, Dichtringe, Dichteinlagen, Dichtflüssigkeiten u. ä. erfolgen.

Für ein stoffschlüssiges Verbinden von benachbarten Modulen eines thermischen Speicherbehälters, beispielsweise durch Verschweißen oder Verkleben, ist es erforderlich, dass die Module mit einer Anpress- oder Fügekraft während der Montage aneinander angepresst werden. Dies erfolgt gemäß dem Stand der Technik beispielsweise über die Kopplungsbereiche bildende Flansche der benachbarten Module, welche über Schraubverbindungen, Schraubzwingen oder anderweitige Klemmelemente aneinander angepresst werden. Hierzu müssen die Schraubverbindungen oder Schraubzwingen an dem Einbauort, unter Umständen auch in beengten Einbauverhältnissen bei optimaler Raumausnutzung des modularen Speicherbehälters, über den gesamten Umfang der Flansche verteilt angeordnet und verspannt werden, was nicht immer möglich ist, aber in jedem Fall einen erhöhten Montageaufwand erfordert. Auch bei einer Verwendung einer großen Zahl von Schraubverbindungen oder Schraubzwingen wirken diese lediglich in diskreten Teilumfangsbereichen, so dass die Anpresskraft der Kopplungsbereiche oder Flansche aneinander in Umfangsrichtung variieren kann. Die Variation der Anpresskraft kann die Qualität der hergestellten Klebe- oder Schweißverbindung beeinträchtigen und/oder zu mechanischen Beanspruchungen der Module infolge von Beanspruchungsspitzen führen. Sollen die Schraubverbindungen oder Schraubzwingen nach Herstellung der Klebeverbindung oder Schweißverbindung entfernt werden, erfordert dies zusätzliche aufwändige Arbeitsschritte. Erfindungsgemäß wird vorgeschlagen, dass das Modul eine (integral ausgebildete) Beschwerungstasche oder einen Halte- und/oder Aufstandsbereich für eine Beschwerungstasche aufweist. Unter einer Beschwerungstasche wird ein beliebiger Aufnahmekörper für ein Beschwerungsmittel verstanden. Dieser kann geschlossen oder offen, beispielsweise einseitig nach oben offen, ausgebildet sein. Im Rahmen der Erfindung möglich ist, dass die Beschwerungstasche geeignet für ein festes Beschwerungsmittel ausgebildet ist, so dass diese Tasche auch mehrere Öffnungen aufweisen kann, solange das Beschwerungsmittel hierin gehalten werden kann. Ebenfalls möglich ist, dass in der Beschwerungstasche ein Schüttgut wie bspw. Sand als Beschwerungsmittel Einsatz findet. Bevorzugt wird aber die Beschwerungstasche geeignet ausgebildet für die Aufnahme eines Beschwerungsfluids, bei welchem es sich auch bereits um das Fluid handeln kann, welches später in dem Speicherbehälter bevorratet werden soll. In diesem Fall ist die Beschwerungstasche (ggf. bis auf etwaige Einfüll- und/oder Austrittsöffnungen für das Fluid) fluiddicht auszubilden. Erfindungsgemäß kann zumindest ein Teil einer Anpresskraft zwischen benachbarten Modulen in deren Kopplungsbereich durch das in der Beschwerungstasche angeordnete Beschwerungsmittel aufgebracht werden. Durch die Dimensionierung der Beschwerungstasche kann konstruktiv bereits Einfluss auf die maximale Beschwerung, also auch auf die Anpresskraft zwischen den benachbarten Modulen, genommen werden. Erfindungsgemäß ist das Modul zumindest für eine derartige Beschwerungstasche vorbereitet, indem dieses mit einem geeigneten Halte- und/oder Aufstandsbereich ausgestattet ist. Um lediglich einige nicht beschränkende Beispiele zu nennen, kann es sich bei dem Haltebereich um einen Befestigungsbereich für die Beschwerungstasche, einen Haken zum Einhängen einer Beschwerungstasche, eine vertikal orientierte Ausnehmung zum Einsetzen einer Beschwerungstasche, eine vorbereitete Haltefläche zum Ankleben oder Verschweißen eines Grundkörpers des Moduls mit der Beschwerungstasche u. ä. handeln. Möglich ist auch, dass das Modul gezielt mit einem Aufstandsbereich ausgestattet ist, auf welchen die Beschwerungstasche lose aufgestellt werden kann oder auf welchem die Beschwerungstasche nach dem Aufstellen zusätzlich gesichert werden kann. Die Anbindung oder Integration der Beschwerungstasche an das Modul kann einen guten Kraftfluss von dem Beschwerungsmittel über die Beschwerungstasche zu einer Wandung des Moduls und zu den Kopplungsbereichen gewährleisten. Eine u. U. auf diese Weise herbeigeführte konstante Anpressspannung in den Kopplungsbereichen ist, insbesondere bei sich unter Umständen elastisch und/oder plastisch verformenden Modulen, für die Erzeugung von Schweißnähten in diesen Kopplungsbereichen zwischen den benachbarten Modulen von Vorteil. Erfindungsgemäß kann die Montage der Module des Speicherbehälters signifikant vereinfacht werden - im einfachsten Fall werden die Module lediglich aufeinander gestapelt. Dann wird das Beschwerungsmittel in der mindestens einen Beschwerungstasche angeordnet, womit die erforderliche Anpress- oder Fügekraft in den Kopplungsbereichen der Module gewährleistet ist. Mittels dieser Anpress- oder Fügekraft kann dann die Verbindung der Module erfolgen, insbesondere eine stoffschlüssige Verbindung durch ein Kleben oder Schweißen, wobei die Anpress- und Fügekraft durch das Beschwerungsmittel gewährleistet ist. Durchaus möglich ist, dass das von der Erfindung umfasste Modul die Beschwerungstasche selbst noch nicht aufweist, aber bereits mit dem Halte- und/oder Aufstandsbereich ausgestattet ist. In bevorzugter Ausgestaltung der Erfindung ist die Beschwerungstasche Bestandteil des Moduls. Hierbei kann die Beschwerungstasche integraler Bestandteil des Moduls sein oder an einem Grundkörper des Moduls lösbar oder permanent befestigt werden, sodass das Modul mehrteilig mit dem Grundkörper und der Beschwerungstasche ausgebildet ist.

Für den Fall, dass die Verbindung benachbarter Module in den Kopplungsbereichen durch ein Schweißverfahren erfolgen soll, kann die Verschweißung manuell erfolgen, indem der Schweißer den Speicherbehälter einmal umrundet und hierbei die Kopplungsbereiche miteinander verschweißt. Dieses Verschweißen ist allerdings arbeitsintensiv, wobei die Güte der erstellten Schweißnaht abhängig ist von der Sorgfalt des Schweißers. Darüber hinaus erfordert ein derartiges Verschweißen der Kopplungsbereiche miteinander, dass der Speicherbehälter, zumindest während der Montage, von allen Seiten frei zugänglich ist und beispielsweise nicht in einer Raumecke angeordnet sein kann oder einen Raum nicht weitestgehend ausfüllen kann. Für eine bevorzugte Ausgestaltung der Erfindung findet ein Schweißelement Einsatz, welches mittels elektrischer Bestromung aktivierbar ist. Um lediglich ein Beispiel für ein derartiges, im Rahmen der Erfindung einsetzbares Schweißelement zu nennen, wird auf flexible Schweißstangen gemäß WO 2011/057400 A1 verwiesen. Diese Schweißstangen verfügen über einen Kern aus einem weichen thermoplastischen Kunststoff, einen Draht, welcher um den inneren Kern geschlungen ist, sowie eine äußere Ummantelung aus einem ebenfalls thermoplastischen Kunststoff, welcher den inneren Kern und den Draht ummantelt. Die Schweißstange wird zwischen zwei zu verbindenden Oberflächen, hier den Kopplungsbereichen benachbarter Module, angeordnet und mit einer Anpresskraft, welche hier durch die Beschwerungstaschen und das Beschwerungsmittel aufgebracht wird, zwischen den beiden Kopplungsbereichen verpresst. Wird der Draht elektrisch beaufschlagt, kommt es zu einer Erwärmung des Drahts, welche zu einem Schmelzen des thermoplastischen Kerns und der Ummantelung führt mit hieraus resultierender stoffschlüssiger Verbindung der Kopplungsbereiche. Während die Druckschrift WO 2011/057400 A1 einen Einsatz der Schweißstangen für die fluiddichte Verbindung von zwei Rohren vorschlägt bei Anordnung der Schweißstangen in einem hohlzylinderförmigen Zwischenraum zwischen einer inneren Mantelfläche eines ersten Rohrendes und einer zylinderförmigen äußeren Mantelfläche eines zweiten Rohrendes, kann erfindungsgemäß die Anwendung derartiger Schweißstangen für das Verbinden von Modulen von Speicherbehältern erfolgen. Erfindungsgemäß kann hierbei ein Schweißelement wie eine Schweißstange bereits an dem Modul vorgesehen sein, beispielsweise über ein Befestigungsmittel an dem Modul gehalten sein, stoffschlüssig an dem Modul angeklebt sein, an das Modul angeschmolzen sein u. ä. Ebenfalls möglich ist, dass das Modul einen Aufnahmebereich für ein Schweißelement besitzt, beispielsweise eine Nut, in welche das Schweißelement eingelegt werden kann. Vorzugsweise ist die genannte Nut derart dimensioniert ist, dass bei Wirkverbindung des Kopplungsbereichs mit der Nut mit dem anderen Kopplungsbereich geschmolzenes Material des Schweißelements, insbesondere der Schweißstange, mit den Kopplungsbereichen beider Module in Wirkverbindung tritt. Möglich ist auch der Einsatz anderer Schweißverfahren im Rahmen der vorliegenden Erfindung. Um lediglich einige nicht beschränkende Beispiele zu nennen, kann ein Polyfusions-Schweißverfahren Einsatz finden, wie dieses auf der Internet-Seite www.akatherm.com/drainage/de/pageid/drainage-akafusion-electrofusion beschrieben ist. Hinsichtlich weiterer möglicher, grundsätzlich im Rahmen der Erfindung einsetzbarer Schweißverfahren wird beispielhaft auf EP 0 278 768 A2, EP 0 355 579 A2, EP 0 899 085 A2 und EP 2 368 695 A2 verwiesen.

Um lediglich ein Beispiel für mögliche Materialien, aus denen die Module gefertigt sein können, zu nennen, kann das Modul aus Kunststoff hergestellt sein, wobei dann auch die Beschwerungstasche in das Modul eingeformt sein kann. Möglich ist auch, dass das Volumen der Beschwerungstaschen veränderbar ist. Beispielsweise können die Beschwerungstaschen flexibel ausgebildet sein, sodass diese zusammengeklappt oder -gefaltet werden können, wenn diese nicht benötigt werden. Das Zusammenfalten oder -klappen kann hierbei in demontiertem Zustand erfolgen, um beispielsweise das Transport- und Lagervolumen zu verringern. Auch möglich ist, dass das Zusammenfalten oder -klappen in montiertem Zustand erfolgt, so dass die Beschwerungstasche bei Betrieb des Speicherbehälters ein verringertes Volumen einnimmt. Ebenfalls möglich ist der Einsatz von Tanks, deren Volumen variabel ist. Beispielsweise können die flexiblen Beschwerungstaschen in Form der erläuterten veränderbaren Taschen oder Tanks aus mindestens einem Elastomerwerkstoff hergestellt sein, wobei diese integraler Bestandteil des Moduls sein können, fest verbundener Bestandteil des Moduls sein können oder abnehmbarer Bestandteil des Moduls sein können. Ebenfalls möglich ist allerdings auch, dass die Beschwerungstasche abnehmbar ausgebildet ist. Die abnehmbare Ausgestaltung der Beschwerungstasche und Verbindung mit dem Modul kann ermöglichen, dass je nach Einsatzzweck eine unterschiedliche Anzahl von Beschwerungstaschen Einsatz findet, die Beschwerungstaschen nach der Montage entfernt werden können u. ä. Grundsätzlich kann eine Beschwerungstasche oder können mehrere Beschwerungstaschen an beliebigen Orten des Moduls angeordnet sein. In bevorzugter Ausgestaltung sind Beschwerungstaschen gleichmäßig in Umfangsrichtung um das Modul verteilt angeordnet. Hierdurch kann eine in Umfangsrichtung möglichst gleichförmige Anpresskraft (oder auch eine gezielte Variation der Anpresskraft) im Kopplungsbereich erzeugt werden. Gemäß einem weiteren Vorschlag der Erfindung ist eine Beschwerungstasche in Umfangsrichtung umlaufend ausgebildet, so dass über den gesamten Umfang Beschwerungskräfte und damit Anpresskräfte im Kopplungsbereich erzeugt werden können. Für die fluiddichte Ausbildung der Beschwerungstaschen und Befüllung derselben mit einem Fluid verteilt sich das Fluid in der in Umfangsrichtung umlaufenden Beschwerungstasche automatisch. Möglich ist, dass die Beschwerungstasche außen, also außerhalb einer den Innenraum des Speicherbehälters begrenzenden Wandung, angeordnet ist. Eine derartige Beschwerungstasche ist besonders einfach von außen zugänglich. Für den Fall, dass die Beschwerungstasche abnehmbar ausgebildet ist, kann die Beschwerungstasche auch auf einfache Weise nach der Montage von dem Speicherbehälter entfernt werden. Alternativ oder kumulativ möglich ist aber auch, dass die oder eine Beschwerungstasche innen, also innerhalb einer den Innenraum des Speicherbehälters begrenzenden Wandung, angeordnet ist, Diese Ausgestaltung ermöglicht, dass schon während der Montage die Module des Speicherbehälters ohne zusätzlichen Raumbedarf außerhalb des Speicherbehälters angeordnet werden können, so dass beispielsweise eine Wandung an einer Wandung oder einer Ecke des Raumes anliegen kann. Das Volumen der Beschwerungstasche kann für diese Ausgestaltung ein Teilvolumen des Innenraums des Speicherbehälters ausbilden, so dass die Beschwerungstasche für diese Ausgestaltung multifunktional ist, indem diese einerseits das Beschwerungsmittel während der Montage aufnimmt und andererseits im Betrieb des Speicherbehälters das in dem Speicherbehälter bevorratete Fluid (oder ein anderes Beschwerungsmittel) aufnehmen kann. Soll Fluid aus dem Speicherbehälter während oder nach dem Betrieb desselben vollständig entleert werden können, ist es von Vorteil, wenn die Beschwerungstasche einen unteren fluidischen Auslass besitzt, welcher mit einem geeigneten Verschlussmittel während der Montage verschlossen ist, so dass dann ein beschwerendes Fluid in der Beschwerungstasche verbleibt. Nach der Montage und/oder während des Befüllens des Speicherbehälters mit dem zu bevorratenden Fluid kann dann die Auslassöffnung geöffnet werden.

Während grundsätzlich die Herstellung des erfindungsgemäßen Moduls in einem beliebigen Herstellungsverfahren und mit einem beliebigen Material möglich ist, schlägt die Erfindung in einer Ausgestaltung vor, dass das Modul in einem Spritzgussverfahren hergestellt ist, beispielsweise aus Kunststoff. Mittels derartiger Spritzgussverfahren kann mit geringen Kosten eine einfache Fertigung erfolgen, wobei auch komplexe Formgebungen je nach eingesetzter Formkavität und etwaigen Kernen möglich sind. Ebenfalls möglich ist, dass das Modul mittels Rotationsformen hergestellt ist. Unter einem "Rotationsformen" wird ein Herstellungsverfahren verstanden, bei welchem mittels biaxialer Rotation bei einer Erwärmung in Hohlkörperformen pulverförmiges Thermoplast-Material an den Innenflächen der Form abgelagert wird. Ein derartiges Rotationsformen kann mit einfachen Werkzeugen und niedrigen Werkzeugkosten durchgeführt werden. Eine Wirtschaftlichkeit des Rotationsformens kann sich bereits für kleine oder mittlere Serien ergeben. Mittels eines Rotationsformens können auch Speicherbehälter mit größeren Volumina bis hin zu 6000 Litern gefertigt werden. Auch eine kompliziertere Formgebung mit Öffnungen, durchgehenden Verbindungen, Gewinden, Einlegeteilen usw. kann gemäß dem Stand der Technik mit einem Rotationsformen hergestellt werden. Möglicherweise ergeben sich mit dem Rotationsformen gleichmäßige Wandstärken und ein nahtloser Hohlkörper. Das Rotationsformen kann erfolgen mit einer sogenannten Einzelschussmaschine, bei der der gesamte Prozess vom Beschicken der Form, Vorheizen, Heizen, Kühlen bis zum Ausformen Schritt für Schritt geschieht. Weiterhin sind mehrarmige sogenannte Karussellanlagen einsetzbar, bei denen das Beschicken und Ausformen gleichzeitig mit dem sich im Ofen befindlichen Träger geschieht. Ebenfalls einsetzbar sind sogenannte Rock n' Roll-Anlagen, welche Einzelschussmaschinen sind, die sich nur in der Hauptachse drehen, in der Nebenachse jedoch nur eine Kippbewegung ausführen. Diese Anlagen eigenen sich insbesondere für zylindrische oder längliche Module. Auch möglich ist ein Schweißen des Moduls aus plattenförmigen Halbzeugen, wobei hierzu auch Roboter-Schweißextruder Einsatz finden können.

Während grundsätzlich die mehrstückige oder einstückige Ausbildung des Moduls, die Ausbildung des Moduls als Verbundkörper mit oder aus einem beliebigen Material, beispielsweise auch einem Metall, mit einem Dämmmaterial, mit integrierten Leitungen für ein Fluid und elektrische Anschlussleitungen und zusätzlichen Bauelementen möglich ist, ist gemäß einer besonderen Ausgestaltung das Modul aus einem Kunststoff hergestellt. Als mögliche Materialien kommen insbesondere PP (Polypropylen), PEHD (Polyethylen hoher Dichte), PERT (PolyEthylene Raised Temperature), PVC (PolyVinylChlorid), PVDF (Polyvinylidenfluorid), GFK (Glasfaser-verstärkter Kunststoff) oder PA (Polyamid) in Betracht.

Um das Befüllen der Beschwerungstasche mit einem beschwerenden Fluid zu ermöglichen, schlägt die Erfindung in weiterer Ausgestaltung vor, dass das Modul im Bereich der Beschwerungstasche mit einer Öffnung oder einem Anschluss für ein beschwerendes Fluid ausgestattet ist. Befindet sich beispielsweise die Beschwerungstasche außerhalb einer den Innenraum des Speicherbehälters begrenzenden Wandung, kann die Öffnung oder der Anschluss in einer außenliegenden Wandung der Beschwerungstasche angeordnet sein. Ist hingegen die Beschwerungstasche im Inneren einer Wandung des Speicherbehälters angeordnet, kann die Öffnung oder der Anschluss im Bereich der Wandung angeordnet sein.

Bevorzugt ist der Kopplungsbereich des Moduls für die Kopplung mit dem benachbarten Modul im Bereich einer Stirnseite des Moduls angeordnet, so dass die Module mit ihrer Gewichtskraft, welche durch die Beschwerungstasche und das Beschwerungsmittel erhöht ist, aneinander angepresst werden. Hierbei schlägt die Erfindung vor, dass der Kopplungsbereich von einer Stirnfläche einer Wandung des Moduls, vorzugsweise der Wandung des Moduls, welche den Innenraum des Speicherbehälters begrenzt, ausgebildet ist. Ebenfalls möglich ist, dass der Kopplungsbereich von einer radial orientierten Abwinklung der Wandung ausgebildet ist, wodurch, unter Umständen auch für geringe Wandstärken der Wandung, ein vergrößerter Kopplungsbereich bereitgestellt werden kann. Im Bereich der Stirnfläche der Wandung oder der Abwinklung der Wandung kann dann auch ein Schweißelement angeordnet sein oder ein Aufnahmebereich für ein Schweißelement vorgesehen sein.

Für die Gestaltung des Kopplungsbereichs, insbesondere die Konturierung desselben, gibt es vielfältige Möglichkeiten. Für eine bevorzugte Ausgestaltung der Erfindung ist der Kopplungsbereich mit einer Nut ausgebildet, im Bereich welcher das Modul mit einer Feder eines benachbarten Moduls eine Nut-Feder-Verbindung eingehen kann. Eine Einpressung der Nut in die Feder wird (zumindest teilweise) durch die Gewichtskraft des Beschwerungsmittels in der Beschwerungstasche herbeigeführt. Somit kann auch bereits vor dem Erstellen der stoffschlüssigen Verbindung zwischen den benachbarten Modulen eine zumindest vorbereitende Verbindung der beiden benachbarten Modulen erfolgen, welche unter Umständen auch eine Montageerleichterung darstellt und dafür sorgt, dass eine exakte Ausrichtung der beiden benachbarten Module zueinander erfolgt. Es versteht sich, dass auch nach dem Herstellen der stoffschlüssigen Verbindung die Nut-Feder-Verbindung einen Beitrag zur Kopplung der benachbarten Module leisten kann. Im Extremfall dient dann die stoffschlüssige Verbindung lediglich der Vermeidung, dass ein Abheben des oberen Moduls von dem unteren Modul erfolgt, während eine anderweitige Verbindung der benachbarten Module über die Nut-Feder-Verbindung erfolgt.

In einer weiteren Ausgestaltung der Erfindung ist der Kopplungsbereich mit einer gegenüber einer im Montagezustand vertikalen Achse geneigten Kopplungsfläche ausgebildet. Je nach Neigungswinkel dieser Kopplungsfläche kann eine Art "Keileffekt" genutzt werden, mittels dessen die durch das Beschwerungsmittel herbeigeführte Beschwerungskraft umgewandelt wird in eine Normalkraft bzw. Normalspannung in den geneigten Kopplungsflächen benachbarter Module, die in Abhängigkeit von dem Neigungswinkel größer ist als die Beschwerungskraft selbst. Um lediglich ein nicht beschränkendes Beispiel zu nennen, kann für ringförmige Module eine obere Kopplungsfläche eines unteren Moduls der Mantelfläche eines Kegelstumpfes entsprechen, während die zugeordnete untere Kopplungsfläche eines oberen Moduls ebenfalls kegelstumpfförmig mit entsprechendem Öffnungs- bzw. Neigungswinkel des Kegelstumpfes ausgebildet ist. Im Extremfall kann auch die zuvor genannte Nut-Feder-Verbindung in der Art einer Keil-Nut mit einer Keil-Feder ausgebildet sein, wodurch auch für diese Ausgestaltung die erläuterte "Keilwirkung" ergänzend zur eigentlichen Nut-Feder-Verbindung genutzt werden kann.

Möglich ist, dass das mit der Beschwerungstasche ausgestattete Modul mit einem benachbarten Modul in Kopplungsbereichen der beiden Module verklebt und/oder verschweißt ist. In diesem Fall wird eine Füge- oder Anpresskraft in den Kopplungsbereichen der Module mit einem in der Beschwerungstasche angeordneten Beschwerungsmittel, insbesondere einem Beschwerungsfluid, aufgebracht. Multifunktional kann in einem derart gebildeten Speicherbehälter die Beschwerungstasche genutzt sein, wenn deren Volumen neben der Aufnahme des Beschwerungsmittels auch der Nutzung als Speichervolumen für den Betrieb des Speicherbehälters dient.

Ein Vorteil der erfindungsgemäßen Ausgestaltung des Speicherbehälters ist dessen Erweiterung der Montagemöglichkeiten: Hierzu erfolgt zunächst der Transport der demontierten Module an einen Montageort, wobei auch Module für einen verhältnismäßig großvolumigen Speicherbehälter über kleinere Türöffnungen, Treppen u. ä. an ihren Montageort verbracht werden können. Anschließend erfolgt das Positionieren der Module, wobei benachbarte Module in Kopplungsbereichen aneinander anliegen. Vorzugsweise sind die Module aufeinander gestapelt, wobei die Module zunächst lose allein aufgrund ihres Eigengewichts aufeinander aufliegen. Anschließend erfolgt dann aber das Befüllen mindestens einer Beschwerungstasche mit einem Beschwerungsmittel, vorzugsweise mit einem Fluid. Hierdurch wird die Anpress- oder Fügekraft in den Kopplungsbereichen erhöht. Schließlich erfolgt ein stoffschlüssiges Verbinden der benachbarten Module in den Kopplungsbereichen. Das Versteifungselement kann hierbei vor, mit oder nach dem Verbinden der Kopplungsbereiche miteinander mit mindestens einem Kopplungsbereich montiert oder verbunden werden. In weiterer Ausgestaltung des erfindungsgemäßen Verfahrens erfolgt das stoffschlüssige Verbinden der benachbarten Module in dem Kopplungsbereich mit einem Aufbringen eines adhäsiven Mittels auf mindestens einen Kopplungsbereich. Dies erfolgt vorzugsweise vor dem Positionieren der Module aufeinander. Nach dem Befüllen der Beschwerungstaschen kann dann das stoffschlüssige Verbinden mit dem Aushärten des adhäsiven Mittels erfolgen. Möglich ist, dass vor einem Befüllen des Speicherbehälters mit einem Speicherfluid eine Dichtigkeitsprüfung erfolgt. Beispielsweise kann im Rahmen der Dichtigkeitsprüfung ein Vakuum-, Druckverlust- oder Funkendurchschlagstest durch Anlegen einer hochfrequenten Hochspannung durchgeführt werden.

Für den Fall, dass hingegen das stoffschlüssige Verbinden durch Verschweißen der benachbarten Module in den Kopplungsbereichen miteinander erfolgt, kann in dem erfindungsgemäßen Verfahren ein Erhitzen eines Schweißelements erfolgen, welches in mindestens ein Modul integriert sein kann oder zwischen den beiden Modulen angeordnet wird. Vorzugsweise findet eine Schweißstange gemäß WO 2011/057400 A1 Einsatz, die sich beispielsweise in den Kopplungsbereichen in Umfangsrichtung erstreckt. Mittels einer derartigen Schweißstange kann ein sogenanntes "bewegungsfreies Schweißen" durchgeführt werden, indem die Verschweißung nur dadurch herbeigeführt wird, dass die Schweißstange mit elektrischer Energie beaufschlagt wird, wodurch das Material der Schweißstange verflüssigt wird, und dann ein Aushärten erfolgt.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einer Beschwerungstasche oder einem Versteifungselement die Rede ist, ist dies so zu verstehen, dass genau eine Beschwerungstasche oder ein Versteifungselement, zwei Beschwerungstaschen order zwei Versteifungselemente oder mehr Beschwerungstaschen oder mehr Versteifungselemente vorhanden sein kann/können.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt in einem vertikalen Längsschnitt durch einen mit mehreren Modulen gebildeten Speicherbehälter.
- **Fig. 2**: zeigt in einem vertikalen Längsschnitt ein Modul mit mehreren Beschwerungstaschen.
- **Fig. 3**: zeigt zwei aufeinander gestapelte Module mit dazwischen angeordneten Schweißelementen.
- **Fig. 4**: zeigt aufeinander gestapelte Module, die mit H-förmigen Verbindungselementen und hohlzylinderförmigen Modulelementen gebildet sind, in einem vertikalen Halblängsschnitt.
- **Fig. 5**: zeigt aufeinander gestapelte Module, die mit einem Kasten- oder Hohlprofil gebildet sind, in einem vertikalen Halblängsschnitt.
- **Fig. 6**: zeigt aufeinander gestapelte Module mit Schweißelementen im Bereich einer Nut-Feder-Verbindung benachbarter Module in einem vertikalen Halblängsschnitt.
- **Fig. 7**: zeigt aufeinander gestapelte Module mit Aufstandsbereichen für Beschwerungstaschen.
- **Fig. 8**: zeigt aufeinander gestapelte Module mit alternativer oder kumulativer Erzeugung einer Kopplungskraft in Kopplungsbereichen über Beschwerungstaschen und Klemmelemente.
- **Fig. 9**: zeigt eine Prinzipskizze eines Speicherbehälters, welcher mit zwei Modulen gebildet ist.
- **Fig. 10**: zeigt ein Detail X gemäß Fig. 9 im Bereich der Verbindung der beiden Module in den Kopplungsbereichen mit einem Versteifungselement, wobei hier die Verbindung über eine Verschraubung erfolgt.
- **Fig. 11**: zeigt eine Fig. 10 entsprechende Darstellung mit einer anderen Ausführungsform eines Versteifungselements.
- **Fig. 12**: zeigt eine Fig. 10 entsprechende Darstellung mit einer anderen Ausführungsform eines Versteifungselements.
- **Fig. 13**: zeigt ein Detail gemäß Fig. 10 mit einem Versteifungselement, welches stoffschlüssig mit den Kopplungsbereichen der beiden Module verbunden ist.
- **Fig. 14**: zeigt ein Fig. 13 entsprechendes Detail für eine andere Ausführungsform des Versteifungselements.

### FIGURENBESCHREIBUNG

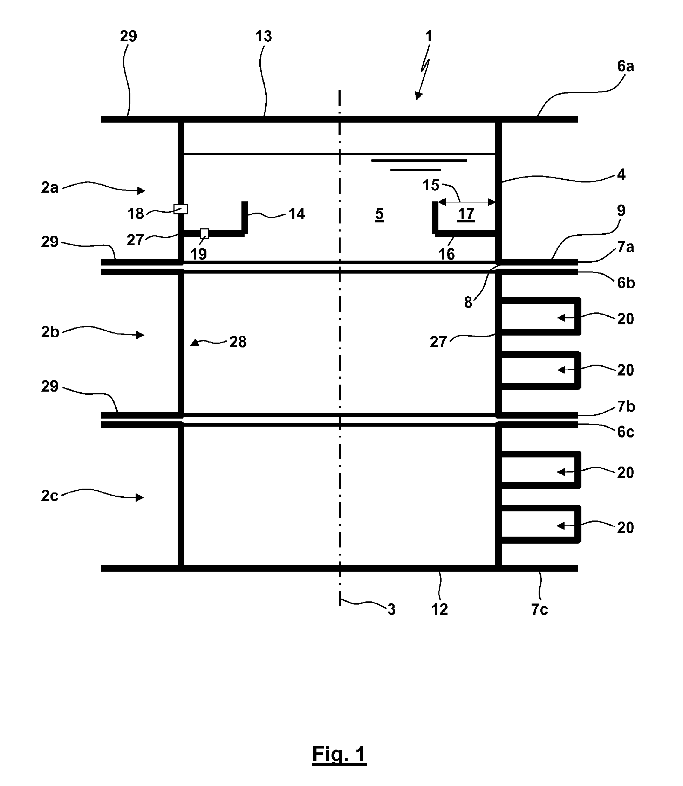

**Fig. 1** zeigt einen Speicherbehälter 1, welcher hier mit drei Modulen 2a, 2b, 2c gebildet ist, die mit fluchtenden Längsachsen 3 aufeinander gestapelt sind.

Die Module 2 verfügen jeweils über eine Wandung 4, mit welcher innenliegend ein Innenraum 5 begrenzt ist. Darüber hinaus besitzt jedes Modul 2a bis 2c einen oberen Kopplungsbereich 6a, 6b. 6c sowie einen unteren Kopplungsbereich 7a, 7b, 7c. Ein Modul 2b kann im Bereich seines oberen Kopplungsbereiches 6b mit einem benachbarten Modul 2a im Bereich von dessen unteren Kopplungsbereich 7a gekoppelt sein. Möglich ist, dass die Kopplungsbereiche 6, 7 allein von Stirnflächen 8 der Wandung 4 ausgebildet sind. Für das in Fig. 1 dargestellte Ausführungsbeispiel sind die Kopplungsbereiche 6, 7 mit flanschartig ausgebildeten und hier radial nach außen orientierten Abwinklungen 9 gebildet. Es versteht sich, dass, abweichend zu dem Ausführungsbeispiel gemäß Fig. 1, die Abwinklungen 9 auch, ausgehend von der Wandung 4, radial nach innen orientiert sein können. Über die Abwinklungen 9 können je nach radialer Erstreckung der Abwinklung 9 Kopplungsbereiche 6, 7 mit vergrößerter Kontaktfläche bereitgestellt werden, wobei im Bereich der Abwinklungen 9 auch zusätzliche Funktionen erfüllt werden können, insbesondere die Integration eines Dichtelementes, eine Zentrierhilfe, Aufnahmeausnehmungen für ein adhäsives Mittel oder Schweißelemente u. ä. Möglich ist, dass zwischen den Kopplungsbereichen 6, 7 oder den Abwinklungen noch mindestens ein Zwischenkörper angeordnet ist.

Die Geometrie der Module 2 kann in einem Querschnitt beliebig sein. Vorzugsweise sind die Module 2 zylindrisch ausgebildet mit hohlzylinderförmiger Wandung 4 und einem hierdurch begrenzten zylindrischen Innenraum 5. Es versteht sich, dass auch beliebige andere Ausgestaltungsformen, beispielsweise quaderförmige Module 2, möglich sind. Die Module besitzen ebene Stirnseiten 10, 11, welche parallel zueinander orientiert sind, so dass sich in Fig. 1 horizontale Teilungsebenen der Module 2 des Speicherbehälters 1 ergeben.

Während gemäß Fig. 1 das mittlere Modul 2b als beidseitig offenes Modul mit Öffnungen im Bereich der Stirnseiten 10, 11 ausgebildet ist, sind die Module 2a, 2c lediglich im Bereich einer Stirnseite offen, während die außenliegende Stirnseite mit einer Bodenwandung 12 bzw. einer Deckenwandung 13 ausgebildet ist. Somit erstreckt sich der Innenraum 5 bei Begrenzung durch die Wandungen 4 der Module 2a bis 2c in horizontaler Richtung durchgehend zwischen der Bodenwandung 12 und der Deckenwandung 13.

In Fig. 1 sind unterschiedliche Möglichkeiten für Beschwerungstaschen 14 dargestellt: Das Modul 2a ist mit einer einzigen innenliegenden Beschwerungstasche 14 ausgebildet, die in Umfangsrichtung umlaufend ausgebildet ist und nach oben offen ist. Die Beschwerungstasche 14 ist in der Art einer Rinne ausgebildet. Die Beschwerungstasche 14 verfügt oben über eine Öffnung 15. In einem Halblängsschnitt ist die Beschwerungstasche 14 mit einer abgewinkelten Wandung 16 in Form eines liegenden L gebildet, wobei ein Schenkel des L radial nach innen orientiert ist mit einem an der Wandung 4 befestigten Endbereich, während der andere Schenkel des L vertikal nach oben orientiert an dem anderen Endbereich des vorgenannten Schenkels des L getragen ist. Somit begrenzen die Wandungen 4, 16 gemeinsam einen Beschwerungstaschen-Innenraum 17, welcher nach oben mit der Öffnung 15 offen ist. Die Wandung 16 kann integral mit der Wandung 4 ausgebildet oder ausgeformt werden oder nachträglich an der Wandung 4 befestigt sein, stoffschlüssig angebunden oder mit der Wandung 4 verschweißt sein.

In dem Beschwerungstaschen-Innenraum 17 kann während der Montage der Module 2 ein Beschwerungsmittel angeordnet sein, welches fest sein kann, ein Schüttgut sein kann oder aber ein Fluid (sogar auch das später in dem Speicherbehälter 1 bevorratete Speicherfluid) sein kann.

Für den montierten Speicherbehälter gemäß Fig. 1 nimmt der Beschwerungstaschen-Innenraum 17 ein Teilvolumen des in dem Innenraum 5 angeordneten thermischen Speicherfluids auf, welches über die Öffnung 15 in Wechselwirkung mit anderen Teilvolumina des Speicherfluids in dem Innenraum 5 steht. Möglich ist, dass die Wandung 4 einen Anschluss 18 besitzt, über welchen ein Beschwerungs- und/oder Speicherfluid von außen in den Beschwerungstaschen-Innenraum 17 eingefüllt werden kann.

Ebenfalls möglich ist, dass die Beschwerungstasche 14, vorzugsweise in einem Bodenbereich derselben, über einen Auslass 19 verfügt, welcher manuell geöffnet oder geschlossen werden kann. Für die Nutzung der Beschwerungstasche 14 wird der Auslass 19 geschlossen, während mit Inbetriebnahme des Speicherbehälters 1 der Auslass 19 geöffnet werden kann, um zu vermeiden, dass mit einer Entleerung des Speicherbehälters 1 ein Restvolumen des Fluids in dem Beschwerungstaschen-Innenraum 17 verbleibt. Möglich ist, dass eine Öffnung und Verschließung des Auslasses 19 über geeignete in die Wandung 4 integrierte Stellmittel von außen ermöglicht ist. Es versteht sich, dass die Beschwerungstasche 14 nicht zwingend in Umfangsrichtung um die Längsachse 3 umlaufend und durchgehend ausgebildet sein muss. Vielmehr kann eine umlaufende Beschwerungstasche 14 auch mit einzelnen Kammern ausgebildet sein. Ebenfalls denkbar ist, dass sich eine Beschwerungstasche 14 lediglich in einem Teilumfangsbereich erstreckt, wobei dann auch mehrere derartige Beschwerungstaschen 14 gleichförmig oder ungleichförmig in Umfangsrichtung um die Längsachse 3 verteilt angeordnet sein können. Möglich ist auch, dass dann mehrere derartige Beschwerungstaschen 14 über fluidische Leitungen, welche vorzugsweise innerhalb des Innenraums 5 verlaufen, miteinander kommunizieren. Ist ein Beschwerungsmittel in dem Beschwerungstaschen-Innenraum 17 angeordnet, führt dies zu einer erhöhten Anpresskraft zwischen den Kopplungsbereichen 6, 7 benachbarter Module 2.

Im Bereich der Module 2b, 2c sind in Fig. 1 abweichend ausgebildete Beschwerungstaschen 20 dargestellt: Die Beschwerungstaschen 20 sind hierbei außenliegend von der Wandung 4 angeordnet und kasten- oder rinnenförmig ausgebildet, wobei sich diese über einen Teilumfang oder durchgehend über den gesamten Umfang erstrecken können. Während grundsätzlich auch eine nach oben offene Ausgestaltung der Beschwerungstaschen 20 möglich ist, zeigt Fig. 1 eine oben geschlossene Ausbildung der Beschwerungstaschen 20. Es versteht sich, dass auch die Beschwerungstaschen 20 Anschlüsse 18 und/oder Auslässe 19 für ein Fluid aufweisen können. Durchaus denkbar ist auch, dass die Beschwerungstaschen 14, 20 nach oben offen sind, so dass auch ein festes Beschwerungsmittel in die Beschwerungstasche 14, 20 eingeführt werden kann.

Fig. 1 zeigt ein Modul 2b, in welchem übereinander zwischen den Kopplungsbereichen 6, 7 zwei Beschwerungstaschen 20 angeordnet sind.

Ist lediglich eine Beschwerungstasche 14 innenliegend von der Wandung 4 angeordnet oder lediglich eine Beschwerungstasche 20 außenliegend von der Wandung 4 angeordnet, führt die Beschwerung dazu, dass die Wandung 4 auf Biegung beansprucht wird um eine Biegeachse, welche durch die Wandung 4 verläuft und vertikal zu der Zeichenebene gemäß Fig. 1 orientiert ist für den geschnittenen Längsschnitt der Wandung 4. Eine etwaige elastische Durchbiegung der Wandung und damit auch unter Umständen veränderte Ausrichtung der Kopplungsbereiche 6, 7 muss in einem tolerierbaren Bereich gehalten werden durch geeignete Steifigkeitsgestaltung der Module 2, also Wahl des Materials, konstruktive Vorgabe der Wandungsstärke, versteifende Rippen u. ä. Eine Reduzierung des infolge der Beschwerung wirkenden Biegemomentes kann erfolgen, wenn Beschwerungstaschen 20 sowohl innenliegend als auch außenliegend von der Wandung 4 angeordnet sind, so dass sich hierdurch hervorgerufene Biegemomente zumindest teilweise aufheben.

In dem Ausführungsbeispiel gemäß Fig. 1 sind die Beschwerungstaschen 14, 20 über einen Haltebereich 27 an einem Grundkörper 28 des Moduls 2 gehalten, der vorzugsweise von der Wandung 4 ausgebildet ist. Für das dargestellte Ausführungsbeispiel sind der Haltebereich 27 und die Beschwerungstaschen 14, 20 integraler Bestandteil des Moduls 2 (wobei abweichend zu Fig. 1 auch eine mehrteilige Ausbildung möglich ist, wobei dann die Beschwerungstaschen 14, 20 lösbar oder fest über den Haltebereich 27 mit dem Grundkörper 28 gekoppelt oder koppelbar sind). Optional kann das Modul 2 alternativ oder kumulativ auch Aufstandsbereiche 29 ausbilden, im Bereich welcher vorzugsweise temporär Beschwerungstaschen angeordnet werden können, wobei diese lose auf den Aufstandsbereichen 29 aufstehen können oder zusätzlich mit dem Modul 2 verbunden werden.

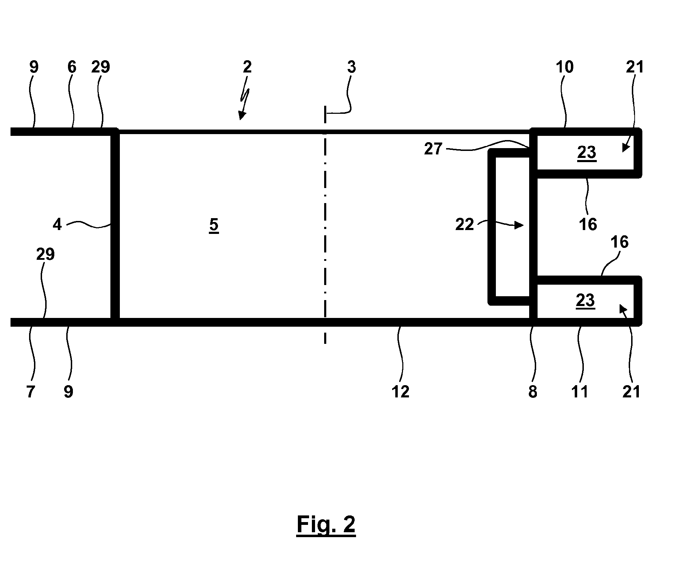

Während gemäß Fig. 1 die außenliegenden Beschwerungstaschen 20 zwischen den Kopplungsbereichen 6, 7 mit Abstand von diesen in Richtung der Längsachse 3 angeordnet sind, zeigt Fig. 2 alternative Möglichkeiten für die Ausgestaltung von Beschwerungstaschen 21, 22: Die Beschwerungstaschen 21 besitzen Beschwerungstaschen-Innenräume 23, welche zusätzlich zu der Wandung 16 nach oben oder nach unten begrenzt sind durch die Abwinklung 9. Darüber hinaus zeigt Fig. 2 alternativ oder kumulativ eine Beschwerungstasche 22, welche innenliegend von der Wandung 4 angeordnet ist. Im Gegensatz zu der Beschwerungstasche 14 ist die Beschwerungstasche 22 oben geschlossen ausgebildet. Es versteht sich, dass die Beschwerungstaschen 21, 22 ebenfalls über Anschlüsse 18 und/oder Auslässe 19 verfügen können, welche zur Vereinfachung in Fig. 2 nicht dargestellt sind.

Werden die Kopplungsbereiche 6, 7 im Bereich der einander zugewandten Stirnseiten 10, 11 mit einem adhäsiven Mittel versehen, die Module 2 wie in Fig. 1 dargestellt aufeinander gestapelt und dann die Beschwerungstaschen 14, 21, 22 mit einem Beschwerungsmittel versehen, ergibt sich im Kontaktbereich der Kopplungsbereiche 6, 7 benachbarter Module 2 eine Anpressoder Fügekraft, welche eine gute adhäsive Verbindung der benachbarten Module 2 nach dem Aushärten des adhäsiven Mittels gewährleistet.

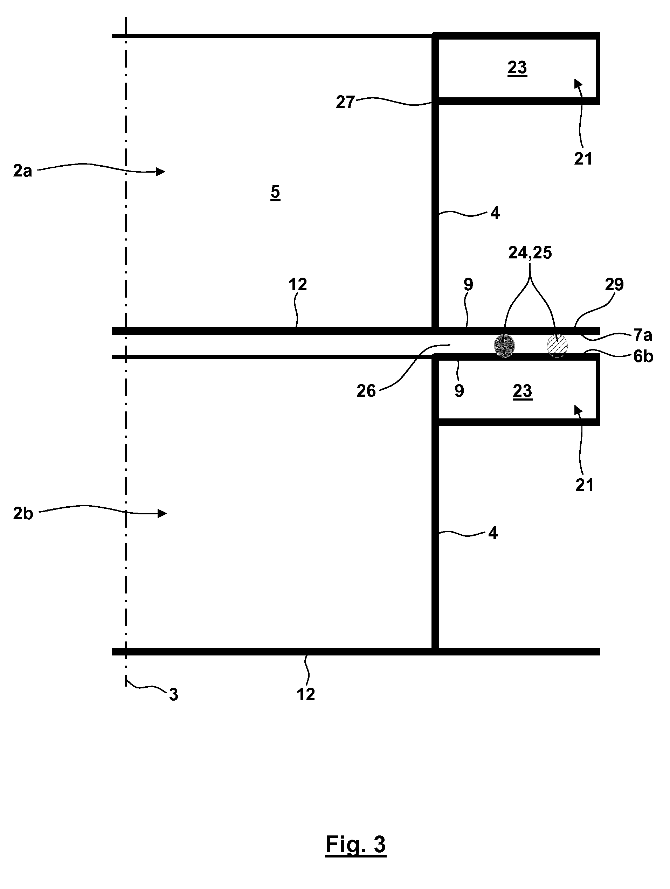

Hingegen zeigt **Fig. 3** ein Verschweißen benachbarter Module 2a, 2b miteinander. Zwischen dem kreisringförmigen unteren Kopplungsbereich 7a des Moduls 2a und dem kreisringförmigen oberen Kopplungsbereich 6b des Moduls 2b ist ein hier in Umfangsrichtung umlaufendes Schweißelement 24, insbesondere eine Schweißstange 25 gemäß WO 2011/057400 A1, zwischengeordnet. Ohne elektrische Beaufschlagung des Schweißelements 24 ist der thermoplastische Kunststoff der Schweißstange 24 noch fest, so dass die Kopplungsbereiche 7a, 6b lediglich über die Schweißstange 25 miteinander in Wirkverbindung stehen. Die Schweißstange 25 erstreckt sich vorzugsweise durchgehend über den gesamten Umfang der Kopplungsbereiche 7a, 6b. Mit elektrischer Bestromung der Schweißstange 25 verflüssigt sich der thermoplastische Kunststoff. Mit der Verflüssigung der Schweißstange 25 verringert sich ein Zwischenraum 26 zwischen den Kopplungsbereichen 7a, 6b, wobei sich der verflüssigte Kunststoff der Schweißstange 25 dann möglichst großflächig zwischen den Kopplungsbereichen 7a, 6b verteilt. Mit einer Aushärtung des Materials der Schweißstange 25 nach Beseitigung der elektrischen Beaufschlagung ist eine stoffschlüssige Verbindung der Kopplungsbereiche 7a, 6b geschaffen, wobei diese stoffschlüssige Verbindung mit dem thermoplastischen Kunststoff der Schweißstange 25 gleichzeitig zu einer Abdichtung führen kann. Durchaus möglich ist, dass zusätzliche Dichtelemente in den Kopplungsbereichen 7a, 6b vorgesehen sind. Für die Anpress- oder Fügekraft verantwortlich ist einerseits das Eingewicht des Moduls 2a, vor allem aber auch ein Beschwerungsmittel, welches in der Beschwerungstasche 21 angeordnet ist. Die Erfindung ist allerdings nicht auf den Einsatz der Schweißstange 25 wie in Fig. 3 dargestellt eingeschränkt - vielmehr kann die Erzeugung einer Anpresskraft in den Kopplungsbereichen 6b, 7a für jedwede Form der Verbindung von Modulen 2a, 2b eines Speicherbehälters 1 genutzt werden.

Gemäß Fig. 3 sind beide Module 2a, 2b mit einer Bodenwandung 12 ausgestattet, so dass sich in einem derart gebildeten Speicherbehälter 1 voneinander getrennte Teil-Innenräume und Teilbehälter ergeben können. Es versteht sich, dass die Bodenwandung 12 des Moduls 2a gemäß Fig. 3 nicht zwingend vorhanden sein muss.

Die Module 2 sind vorgefertigt in einer eckigen oder runden Querschnittsgeometrie. Die Module 2 werden passgleich übereinander gestapelt. Jedes Modul 2 kann auf nicht dargestellte Weise mit einer Dämmung, beispielsweise einem Weichschaum, einem Hartschaum, Vakuumisolierpaneelen, EPS, mit Anschlüssen oder auch mit Peripherie wie innenliegenden Wärmetauschern aus Kunststoff-, Kupfer- oder Edelstahlrohren oder -platten ausgerüstet sein. Die Module 2 können aus einem fließfähigen Kunststoff gefertigt sein, insbesondere PP, PEHD, PERT, PVC, PVDF, GFK, PA. Die Module können durch Verschweißung, Verklebung oder Laminieren von einzelnen Bestandteilen der Module zusammengebaut sein. Bevorzugt sind die Module 2 aber in einem Spritzgießverfahren oder einem Rotationsformen (auch "Rotomoulding" genannt) hergestellt. Mit einer "negativen" Form aus beispielsweise Aluminium oder Stahl kann nicht nur ein Grundkörper des Moduls 2 gefertigt werden, sondern auch eine Realisierung von Ausformungen wie Haltelaschen, Stegen und Durchführungen realisiert werden. Die Module 2 können per se eigensteif ausgebildet sein, beispielsweise durch ausreichende Wandstärken der Wandung 4 und der Abwinklungen 9 oder durch zusätzliche Rippen, und können den Druck des im Betrieb in dem Speicherbehälter angeordneten Fluids aufnehmen. Zusätzlich kann eine ergänzende außenliegende Struktur, beispielsweise eine Tragstruktur gemäß DE 10 2008 036 669 A1, zusätzlich abgestützt und versteift sein. Eine fluid- oder wasserdichte Verbindung der einzelnen Module 2 kann insbesondere erfolgen durch Aufbringung von Klebstoff zwischen den einzelnen Modulen 2, wobei die Klebe- und Abdichtwirkung von den Parametern Anpresskraft und Zeit abhängig sein kann. Ebenfalls möglich ist, dass die wasserdichte Verbindung erfolgt durch Verschweißen der Module 2 miteinander durch implementierte Schweißelemente 24 oder Schweißstangen 25 in den Kopplungsbereichen 6, 7, wobei Parameter für die Herstellung der Verbindung die Temperatur der Schweißelemente 24, die Anpresskraft in den Kopplungsbereichen 6, 7 und die Zeit ist. Als Beschwerungsmittel findet vorzugsweise bereits das Speicherfluid Einsatz, so dass dieses nach Fertigstellung der Montage überhaupt nicht entleert werden muss. Es versteht sich, dass auch beliebige andere Beschwerungsmittel, beispielsweise Sand oder andere Feststoffe oder Festkörper, in die Beschwerungstaschen 14, 20, 21, 22 eingebracht werden können. Vorzugsweise findet als thermoplastisches Material für die Schweißstange 25 dasselbe Material Einsatz wie das Material, aus welchem die Module 2, die Wandung 4 und/oder die Abwinklung 9 gebildet ist/sind. Die Schweißelemente 24 oder die Schweißstange 25 kann beliebig an einem Kopplungsbereich 6, 7 befestigt sein oder lose auf diesen aufgelegt oder in eine entsprechende Ausnehmung eingelegt sein.

Die Montage eines Speicherbehälters 1 aus den Modulen 2 erfolgt wie folgt: Zunächst werden die einzelnen Module 2 in einen Innenraum oder zu einem Aufstellungsort des Speicherbehälters 1 transportiert. Es folgt zunächst die Reinigung der Kopplungsbereiche 6, 7. Die Module 2 werden mit einem Klebstoff oder einer Schweißstange 25 versehen. Dann werden die Module 2 übereinander gelegt oder gestapelt, wobei auch hierbei eine Schweißstange 25 zwischen den Kopplungsbereichen 6, 7 benachbarter Module 2 angeordnet werden kann. Dann erfolgt die Ausrichtung der Kopplungsbereiche 6, 7. Es folgt die Befüllung der Beschwerungstaschen 14, 20, 21, 22 mit einem Beschwerungsmittel. Die Verbindung der benachbarten Module 2 erfolgt durch Kleben oder Verschweißen. Erfolgt ein Verschweißen mittels einer Schweißstange 25 mit Heizdraht, muss an die Schweißstange 25 eine elektrische Spannung angelegt werden. Beispielsweise kann eine Erhitzung eines Drahts der Schweißstange 25 auf 240°C erfolgen, sofern der thermoplastische Kunststoff der Schweißstange 25 PP ist. Es erfolgt nun ein langsames Aufschmelzen des Kunststoffs der Schweißstange 25. Nach einer vorbestimmten Zeit T_{E} erfolgt die Trennung von der Spannungsquelle. Nach einer vorgegebenen Zeit T_{K} ist das verflüssigte Material der Schweißstange 25 unter der Anpresskraft ausgekühlt. Der Speicherbehälter 1 kann dann befüllt werden. Ggf. ist eine Entfernung des Beschwerungsmittels aus den Beschwerungstaschen 14, 20, 21, 22 erforderlich. Ggf. kann auch ergänzend eine Dichtigkeitsprüfung vor der Befüllung des Speicherbehälters 1 erfolgen. Schließlich erfolgt die Befüllung und Inbetriebnahme des Speicherbehälters 1.

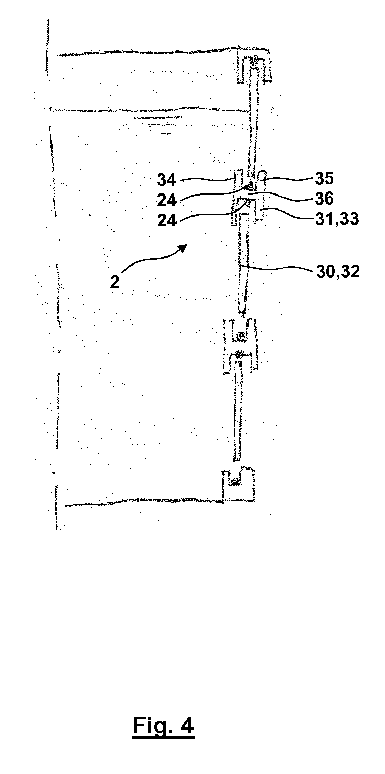

**Fig. 4** zeigt in einem Vertikal-Halbschnitt Module 2, welche jeweils mit zwei Modulelementen 30, 31 gebildet sind. Das Modulelement 30 ist als rohrabschnittsförmiges Wandungselement 32 ausgebildet. Hingegen ist das Modulelement 31 mit einem Ringelement 33 gebildet, welches einen H-förmigen Querschnitt besitzt. Zwischen den Vertikalschenkeln 34, 35 des H sind jeweils passgenau die Wandungselemente 32 aufgenommen. Durch die Beschwerungskraft, die über die Beschwerungstaschen (in Fig. 4 nicht dargestellt) erzeugt wird, werden die Wandungselemente 32 in vertikaler Richtung in die Ringelemente 33 eingepresst. Zwischen den Stirnseiten der Wandungselemente 32 und dem Horizontalschenkel 36 ist jeweils ein Schweißelement 24 angeordnet. Abweichend zu den obigen Erläuterungen können die Modulelemente 30, 31 aber auch nicht ring- bzw. zylinderförmig ausgebildet sein, sondern für die Bildung anderweitig geformter Speicherbehälter, beispielsweise für einen Speicherbehälter in der Form eines Parallelepipeds, geformt sein.

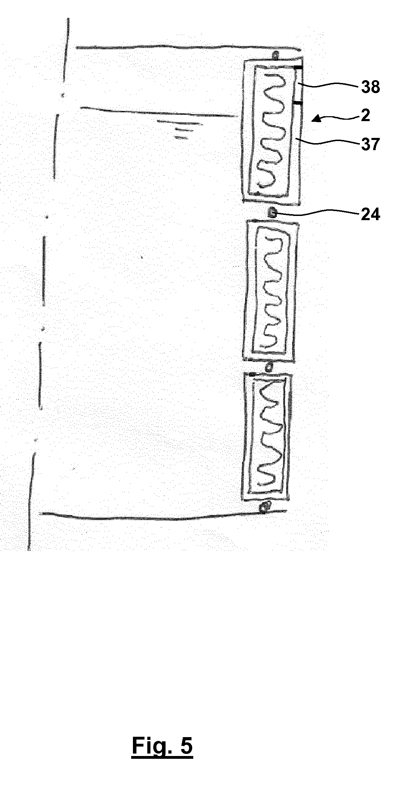

**Fig. 5** zeigt, ebenfalls in einem Vertikal-Halbschnitt, Module 2, die hier mit einem Kasten- oder Hohlprofil 37 ausgebildet sind. Die Kasten- oder Hohlprofile 37 können über mindestens einen Anschluss 18 und/oder Auslass 19 verfügen, wie dies in Fig. 1 dargestellt ist. In Fig. 5 ist eine obere Öffnung 38 des Kasten- oder Hohlprofils 37 zu erkennen, welche sich über den gesamten Umfang erstrecken kann oder lediglich in mindestens einem Teilumfang. Über diese Öffnung 38 kann ein beschwerendes Fluid oder ein anderweitiges Beschwerungsmittel in das Kasten- oder Hohlprofil 37 eingefüllt oder eingebracht werden. Wird das Fluid über einen Auslass 19 nach der Montage und stoffschlüssigen Verbindung benachbarter Module wieder aus dem Kastenoder Hohlprofil 37 entleert, kann für Ausbildung des Speicherbehälters 1 als thermischer Speicherbehälter in einem sukzessiven Arbeitsschritt in den Innenraum des Kasten- oder Hohlprofils 37 durch die Öffnung 38 ein Dämmmittel eingebracht werden, welches dann dauerhaft in dem Innenraum des Kasten- oder Hohlprofils 37 belassen werden kann.

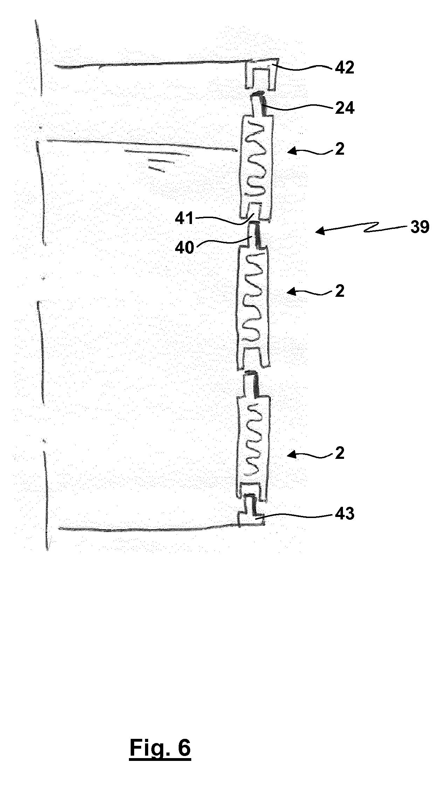

**Fig. 6** zeigt in einem Vertikal-Halbschnitt die Verbindung benachbarter Module 2 über eine Nut-Feder-Verbindung 39. Hierzu besitzt jedes Modul 2 im oberen Endbereich eine vertikalorientierte Feder 40, während die Module 2 im vertikal unteren Endbereich eine vertikal nach oben orientierte korrespondieren Nut 41 aufweisen. Ein oberes Modul 2 wird so auf ein darunter angeordnetes Modul 2 aufgelegt, dass die Feder 40 in die Nut 41 eintreten kann. Dies wird unterstützt durch eine Beschwerungskraft in einer etwaigen Beschwerungstasche. Für diese Ausgestaltung kann ein Schweißelement 24 im Bereich einer Stirnseite der Feder 40 und/oder im Bereich einer seitlichen Flanke der Feder 40 angeordnet sein, wie dies in Fig. 6 dargestellt ist. Es versteht sich, dass das Schweißelement 24 auch in der Nut 41, nämlich im Bereich des Bodens der Nut 41 und/oder einer seitlichen Flanke der Nut 41, angeordnet sein kann. Für den Fall, dass das Schweißelement 24 im Bereich einer seitlichen Flanke der Nut 41 oder Feder 40 angeordnet ist, ist es von Vorteil, wenn diese seitliche Flanke nicht vertikal orientiert ist, sondern geneigt ist, sodass sich mit der Beschwerungskraft eine Art "Keilwirkung" ergibt, infolge welcher sich im Bereich des Schweißelements 24 eine erhöhte Anpresskraft zwischen den beiden benachbarten Modulen 2 ergibt. Gemäß Fig. 6 findet im oberen Endbereich ein abschließendes Randelement 42 bzw. ein Bodenelement 43 Einsatz.

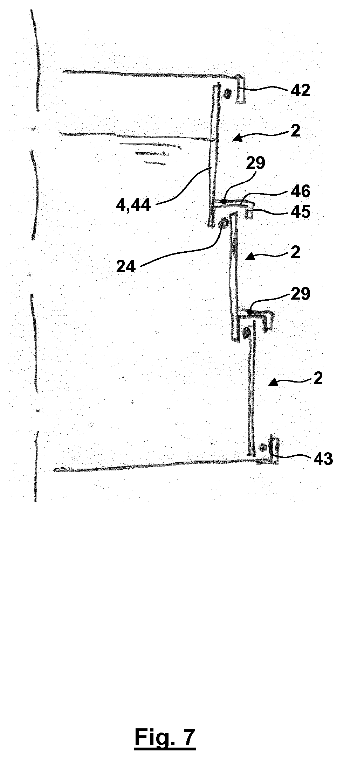

**Fig. 7** zeigt eine anderweitige Ausbildung der Module 2 in einem Vertikal-Halbschnitt: Hier verfügen die ringartigen Module 2 über einen Querschnitt, der in erster Näherung einem h entspricht. Der lange Vertikalschenkel 44 des h bildet die Wandung 4 aus, während zwischen dem kurzen Vertikalschenkel 45 und dem unteren Endbereich des Vertikalschenkels 44 passgenau der Vertikalschenkel 44 eines darunterliegenden Moduls 2 aufgenommen ist. Die Stirnseite des Vertikalschenkels 44 des darunterliegenden Moduls 2 liegt an der Unterseite eines Horizontalschenkels 46 des h an. Das Schweißelement 24 ist wie dargestellt in einem radialen Zwischenraum zwischen den Vertikalschenkeln 44 der benachbarten Module angeordnet. Durchaus denkbar ist aber auch, dass das oder ein Schweißelement 24 zwischen der Stirnseite eines Vertikalschenkels 44 eines unteren Moduls 2 und der Unterseite des Horizontalschenkels 46 angeordnet ist. Möglich ist auch, dass die Vertikalschenkel 44 gegenüber der Vertikalen geneigt sind, sodass sich je nach Beschwerungskraft unter Ausnutzung einer Keilwirkung eine Anpresskraft zwischen den Vertikalschenkeln 44 der benachbarten Module 2 ergibt mit Verpressung des Schweißelements 24 zwischen diesen. Die Module 2 sind hierbei nicht baugleich ausgebildet - vielmehr besitzen die Module 2 in Richtung des Bodens zunehmende Durchmesser, wobei der Durchmesser jeweils um etwas mehr als die Wandstärke der Vertikalschenkel 44 zunimmt.

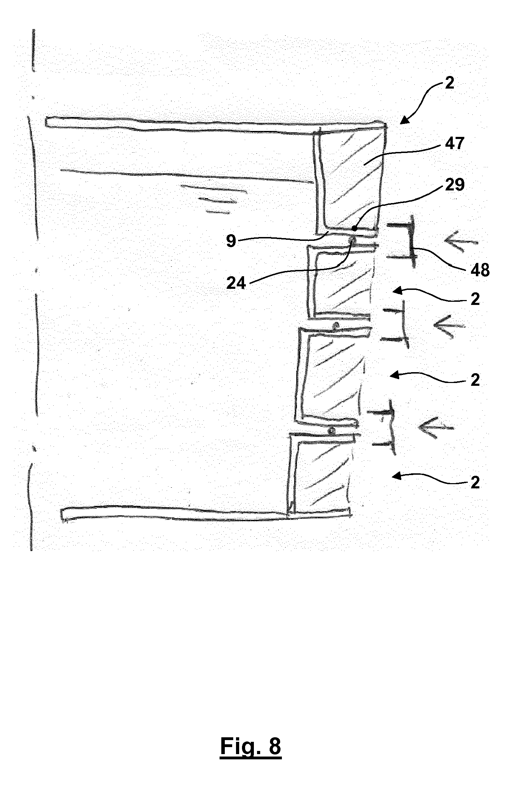

**Fig. 8** zeigt eine im Wesentlichen Fig. 1 entsprechende Ausgestaltung. Allerdings sind hier Beschwerungstaschen 47 von außen zwischen die Abwinklungen 9 eingeführt, welche lose auf Aufstandsbereichen 29 aufstehen können oder auch zusätzlich durch Halteelemente an dem Grundkörper 28 der Module 2 gehalten sein können. Abwinklungen 9 benachbarter Module 2 können zusätzlich über ein klammerartiges Klemmelement 48 aneinander angepresst werden. Hierbei kann es sich bei den Klemmelementen 48 um mehrere verteilt über den Umfang angeordnete diskrete Klemmelemente 48 handeln. Ebenfalls möglich ist, dass es sich bei dem Klemmelement 48 um eine Schiene bspw. aus Edelstahl mit U-Querschnitt, der nach innen geöffnet ist, handelt.

Ergänzend zu der erfindungsgemäßen Erzeugung einer Beschwerungskraft kann ein weiterer Effekt zur Erzeugung einer Anpresskraft in den Kopplungsbereichen genutzt werden, der anhand von Fig. 7 erläutert werden kann. Bei dem in Fig. 7 dargestellten Füllstand ergibt sich gemäß Fig. 7 ein hydrostatischer Druck auf die Module 2, welcher für ein unteres Modul 2 größer ist als für das darüber angeordnete benachbarte Modul. Dies hat zur Folge, dass bei elastischer Ausbildung der Module 2 das untere Modul radial weiter aufgeweitet wird als das darüber angeordnete Modul. Ist das Schweißelement 24 nicht wie in Fig. 7 dargestellt zwischen den Vertikalschenkeln 44 der beiden benachbarten Module angeordnet, sondern vielmehr zwischen dem Vertikalschenkel 44 des unteren Moduls und dem Vertikalschenkel 45 des darüber angeordneten Moduls, führt die unterschiedliche radiale Aufweitung dazu, dass mit dem Befüllen der Module 2 die Anpresskraft zwischen den Kopplungsbereichen der benachbarten Module 2 und damit auch an das Schweißelement 24 vergrößert wird.

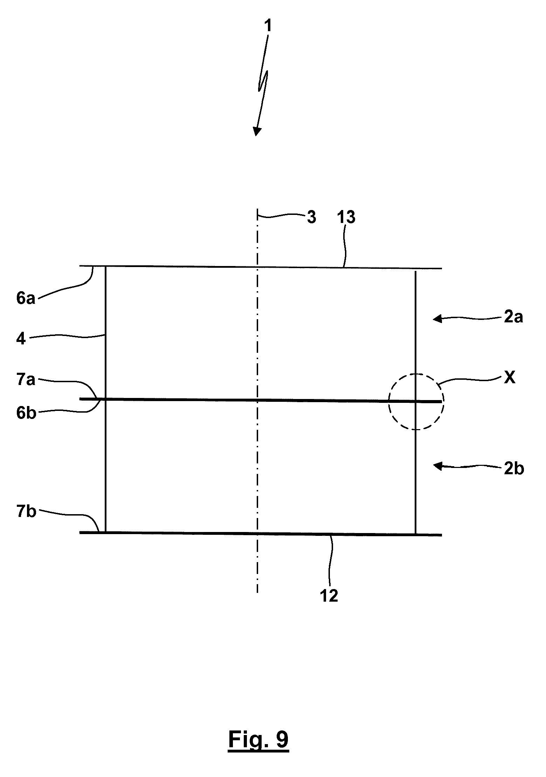

Die folgenden Fig. 9 bis 14 zeigen erfindungsgemäße Ausgestaltungen, bei welchen mindestens ein Versteifungselement 49 Einsatz findet. Grundsätzlich sind die in den Fig. 9 bis 14 dargestellten Ausführungsformen hinsichtlich des Einsatzes des Versteifungselements 49, der Ausbildung des Versteifungselements und dessen Anordnung und Verbindung mit den Kopplungsbereichen 6, 7 auf die Ausführungsbeispiele gemäß Fig. 1 bis 8 übertragbar.

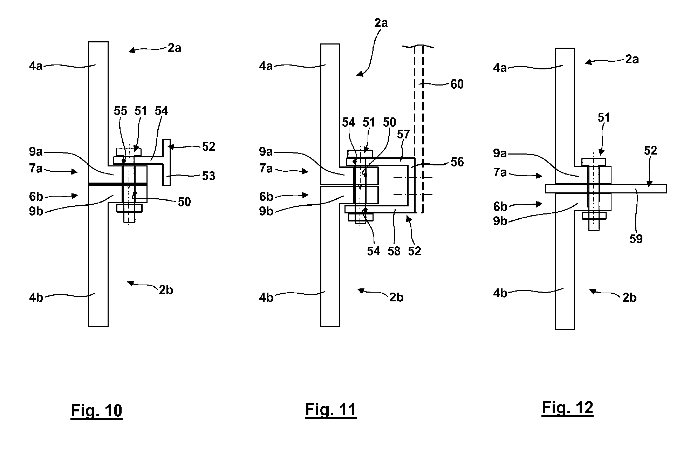

**Fig. 9** zeigt schematisch einen Speicherbehälter 1, welcher mit zwei Modulen 2a, 2b gebildet ist. Hierin ist die Verbindung der Module 2a, 2b im Bereich der Kopplungsbereiche 7a, 6b mit einem Detail X gekennzeichnet, welches für unterschiedliche Ausgestaltungsformen in den Fig. 10 bis 14 dargestellt ist:

Gemäß **Fig. 10** sind die Kopplungsbereiche 7a, 6b mit Abwinklungen 9a, 9b der Wandungen 4a, 4b der Module 2a, 2b gebildet, welche in dem dargestellten Detail mit den Wandungen L-förmig ausgebildet sind. Die Abwinklungen 9a, 9b liegen großflächig aneinander an. Über den Umfang des Speicherbehälters 1 verfügen die Abwinklungen 9a, 9b über zueinander fluchtende Bohrungen 50, durch welche sich Schrauben 51 erstrecken, über welche die beiden Abwinklungen 9a, 9b miteinander verspannt sind. Die Abwinklungen 9a, 9b bilden somit aneinander über die Schrauben 51 angepresste Flansche. Mit von den Schrauben 51 verspannt werden Versteifungselemente 52, welche sich in Umfangsrichtung um die Längsachse 3 erstrecken und geradlinig, kurvenförmig oder kreisbogenförmig ausgebildet sein können mit einer Erstreckung in Umfangsrichtung von 10 cm, 20 cm, 30 cm, 50 cm, einem Meter oder einer beliebigen anderen Erstreckung. Für das Ausführungsbeispiel gemäß Fig.10 ist das Versteifungselement 12 mit einem konstanten Querschnitt in Umfangsrichtung ausgebildet. Hier ist der Querschnitt T-förmig ausgebildet, wobei der obere Schenkel 53 des T parallel zur Längsachse 3 orientiert ist, während der andere Schenkel 54 des T quer zur Längsachse 3 oder horizontal orientiert ist. Für das dargestellte Ausführungsbeispiel verfügt der Schenkel 54 über Bohrungen 55, welche mit Bohrungen 50 fluchten. Gemäß Fig. 10 ist der Schenkel 54 des Versteifungselements 52 zwischen einem Kopf der Schraube 51 und der Oberseite der Abwinklung 9a des Kopplungsbereichs 7a verspannt. In alternativer Ausgestaltung gegenüber Fig. 10 kann allerdings auch ein Verspannen des Versteifungselements 52 zwischen der Unterseite des Kopplungsbereichs 7a und der Oberseite des Kopplungsbereichs 6b erfolgen oder ein Verspannen des Versteifungselements 52 zwischen der Unterseite des Kopplungsbereichs 6b und der Schraube 51 bzw. der zugeordneten Mutter erfolgen. Für den Fachmann ist ersichtlich, dass das dargestellte T-Profil des Versteifungselements 52 eine hohe Steifigkeit gewährleistet, insbesondere gegenüber einer Biegung um ein Biegeachse, welche vertikal zur Zeichenebene orientiert ist, um eine Biegeachse, welche in der Zeichenebene horizontal orientiert ist, sowie um eine Biegeachse, welche in der Zeichenebene vertikal orientiert ist.

**Fig. 11** zeigt eine alternative Ausgestaltungsform des Versteifungselements 52: Hier ist das Versteifungselement 52 mit einem U-förmigen Querschnitt ausgebildet. Hierbei ist der Grundschenkel 56 des U parallel zur Längsachse 3 orientiert, während die Seitenschenkel 57, 58 horizontal oder quer zur Längsachse 3 orientiert sind. Die Seitenschenkel 57, 58 verfügen über Bohrungen 55, welche zueinander fluchten und fluchtend zu den Bohrungen 50 der Kopplungsbereiche 7a, 6b angeordnet sind. Der Abstand der Seitenschenkel 57, 58 ist derart abgestimmt auf die Vertikalerstreckung der Abwinklungen 9a, 9b bzw. der Kopplungsbereiche 7a, 6b, dass unter Berücksichtigung einer Elastizität des Versteifungselements 52 gleichzeitig das Versteifungselement 52 starr an den Modulen 2a, 2b gehalten ist und ein Verspannen der Kopplungsbereiche 7a, 6b miteinander erfolgt. Durchaus möglich ist, dass in Abwandlung gegenüber Fig. 11 einer der Seitenschenkel 57, 58 zwischen der Unterseite des Kopplungsbereichs 7a und der Oberseite des Kopplungsbereichs 6b aufgenommen und verspannt ist.

In Fig. 11 ist gestrichelt eine optionale Weiterbildung der Erfindung dargestellt: Möglich ist, dass Versteifungselemente 52 in unterschiedlichen Höhen über ein Vertikal-Versteifungselement 60 miteinander verbunden sind. Sind zum Beispiel drei Module 2a, 2b, 2c übereinander angeordnet, kann über das Vertikal-Versteifungselement 60 eine Kopplung eines Versteifungselements 52, welches im Kopplungsbereich zwischen den Modulen 2a, 2b angeordnet ist, starr mit einem Versteifungselement 52, welches zwischen den Modulen 2b, 2c angeordnet ist, verbunden werden. Möglich ist, dass in Umfangsrichtung mehrere Vertikal-Versteifungselemente 60 angeordnet sind, wobei diese vertikal orientiert sein können oder auch gegenüber der Vertikalen in einer Projektion in die Umfangsebene geneigt sein können. Die starre oder gelenkige Kopplung der Vertikal-Versteifungselemente 60 mit den Versteifungselementen 52 kann beliebig erfolgen, beispielsweise über eine stoffschlüssige Verbindung oder durch ein Verschrauben.

**Fig. 12** zeigt eine weitere Ausgestaltungsform, für welche das Versteifungselement 52 als Platte oder Kreisringsegment 59 mit rechteckigem Querschnitt ausgebildet ist. Hierbei ist das Versteifungselement 52 zwischen den Kopplungsbereichen 7a, 6b über die Schrauben 51 verspannt.

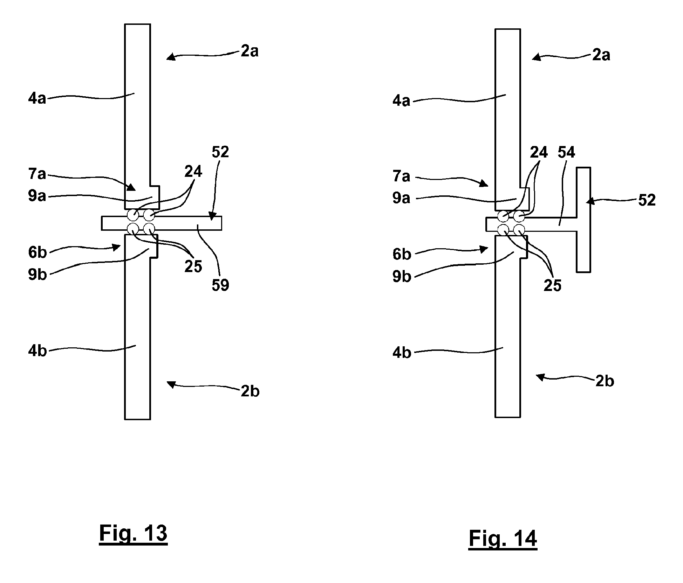

In **Fig. 13** ist der Einsatz (mindestens) eines Versteifungselements 52 in Form eines Kreisringsegments 59 dargestellt ohne Einsatz einer Verschraubung in den Kopplungsbereichen 7a, 6b. Vielmehr erfolgt hier eine stoffschlüssige Verbindung unter Einsatz von Schweißstangen 24, 25. Hierbei sind die Schweißstangen 24 zwischen der Oberseite des Kreisringsegments 59 und der Unterseite des Kopplungsbereichs 7a eingesetzt, während die Schweißstangen 25 zwischen der Unterseite des Kreisringsegments 59 und der Oberseite des Kopplungsbereichs 6b Einsatz finden. Wie diesem Detail zu den vorangegangenen Figuren erläutert worden ist, kann während der Herstellung der stoffschlüssigen Verbindung über die Schweißstangen 24, 25 ein in einer Beschwerungstasche angeordnetes Beschwerungsmittel Einsatz finden, um die erforderliche Anpresskraft bereitzustellen (s. hierzu auch die Ausführungen zu den Figuren 1 bis 7).

Gemäß **Fig. 14** erfolgt der Einsatz des T-förmigen Versteifungselements 52, wobei hier ebenfalls keine Verschraubung eingesetzt ist. Vielmehr erstreckt sich der Schenkel 54 zwischen den Kopplungsbereichen 7a, 6b. Zwischen dem Schenkel 54 und den Kopplungsbereichen 7a, 6b sind Schweißstangen 24, 25 angeordnet.

Möglich ist, dass, wie beispielsweise in den Fig. 10 und 11 dargestellt, das Versteifungselement 52 auf der Außenseite des Speicherbehälters 1 angeordnet ist. Hingegen zeigen die Ausführungsformen gemäß Fig. 13 und 14, dass sich das Versteifungselement 52 sowohl innerhalb des Speicherbehälters 1 als auch außerhalb des Speicherbehälters erstrecken kann, nämlich durch einen Zwischenraum zwischen den Kopplungsbereichen 7a, 6b hindurch. Obwohl dies in den Fig. nicht dargestellt ist, kann sich das Versteifungselement 52 auch ausschließlich innerhalb des Speicherbehälters 1 erstrecken.

In besonderer Ausgestaltung der Erfindung erfüllt das mindestens eine Versteifungselement 52 eine weitere Funktion: Das Versteifungselement 52 bildet für diese Ausgestaltungsform
- unmittelbar ein Beschwerungsmittel aus
- unmittelbar eine Beschwerungstasche 14 aus und/oder
- einen Haltebereich 27 oder Aufstandsbereich 29 für eine Beschwerungstasche oder ein Beschwerungsmittel aus.

### BEZUGSZEICHENLISTE

- 1: Speicherbehälter
- 2: Modul
- 3: Längsachse
- 4: Wandung
- 5: Innenraum
- 6: Kopplungsbereich
- 7: Kopplungsbereich
- 8: Stirnfläche
- 9: Abwinklung
- 10: Stirnseite
- 11: Stirnseite
- 12: Bodenwandung
- 13: Deckenwandung
- 14: Beschwerungstasche
- 15: Öffnung
- 16: Wandung
- 17: Beschwerungstaschen-Innenraum
- 18: Anschluss
- 19: Auslass
- 20: Beschwerungstasche
- 21: Beschwerungstasche
- 22: Beschwerungstasche
- 23: Beschwerungstaschen-Innenraum
- 24: Schweißelement
- 25: Schweißstange
- 26: Zwischenraum
- 27: Haltebereich
- 28: Grundkörper
- 29: Aufstandsbereich
- 30: Modulelement
- 31: Modulelement
- 32: rohrförmiges Wandungselement
- 33: Ringelement
- 34: Vertikalschenkel
- 35: Vertikalschenkel
- 36: Horizontalschenkel
- 37: Kasten- oder Hohlprofil
- 38: Öffnung
- 39: Nut-Feder-Verbindung
- 40: Feder
- 41: Nut
- 42: Randelement
- 43: Bodenelement
- 44: Vertikalschenkel
- 45: Vertikalschenkel
- 46: Horizontalschenkel
- 47: Beschwerungstasche
- 48: Klemmelement
- 49: Versteifungselement
- 50: Bohrung
- 51: Schraube
- 52: Versteifungselement
- 53: Schenkel
- 54: Schenkel
- 55: Bohrungen
- 56: Grundschenkel
- 57: Seitenschenkel
- 58: Seitenschenkel
- 59: Kreisringsegment
- 60: Vertikal-Versteifungselement

## Patentansprüche

1. Speicherbehälter (1) für ein Fluid mit mindestens zwei Modulen, die jeweils über eine in Umfangsrichtung geschlossene Wandung (4) und zumindest einen Kopplungsbereich (6, 7), im Bereich dessen die Module (2) mit einem benachbarten Modul koppelbar ist, verfügen, **dadurch gekennzeichnet, dass** im Kopplungsbereich (6, 7) ein sich über einen Teilumfang erstreckendes Versteifungselement (52) angeordnet ist.

2. Speicherbehälter (1) nach Anspruch 1, **dadurch gekennzeichnet, dass** mehrere Versteifungselemente (52) in Umfangsrichtung aneinander anschließen.

3. Speicherbehälter (1) nach einem der vorhergehenden Ansprüche, **dadurch gekennzeichnet, dass** ein Versteifungselement (52) zwischen zwei benachbarten Modulen (2a, 2b) über ein Vertikal-Versteifungselement (60) mit einem anderen darüber oder darunter angeordneten Versteifungselement verbunden ist.

4. Speicherbehälter (1) nach einem der vorhergehenden Ansprüche 1 bis 3, **dadurch gekennzeichnet, dass** das Versteifungselement (52) einen T- oder U-förmigen Querschnitt besitzt.

5. Speicherbehälter (1) nach einem der vorhergehenden Ansprüche 1 bis 3, **dadurch gekennzeichnet, dass** das Versteifungselement (52) als Kreisringsegment (59) ausgebildet ist.

6. Speicherbehälter (1) nach Anspruch 4 oder 5, **dadurch gekennzeichnet, dass** Kreisringsegment (59) oder ein Schenkel (53; 54; 57; 58) des T oder U des T- oder U-förmigen Querschnitts zwischen den Kopplungsbereichen (7a, 6b) angeordnet ist.

7. Speicherbehälter (1) nach einem der vorhergehenden Ansprüche, **dadurch gekennzeichnet, dass** das Versteifungselement (52) mit mindestens einem Kopplungsbereich (6, 7) verschraubt ist.

8. Speicherbehälter (1) nach Anspruch 7 in Rückbeziehung auf die Anspruch 4, **dadurch gekennzeichnet, dass** ein Schenkel (53; 54; 57; 58) des T oder U mit mindestens einem Kopplungsbereich (6, 7) verschraubt ist.

9. Speicherbehälter (1) nach einem der vorhergehenden Ansprüche, **dadurch gekennzeichnet, dass** das Versteifungselement (52) mit mindestens einem Kopplungsbereich (6, 7) stoffschlüssig verbunden ist.

10. Speicherbehälter (1) nach Anspruch 9, **dadurch gekennzeichnet, dass** mindestens ein Modul (2) eine integrale Beschwerungstasche (14; 20; 21; 22) oder einen Halte- und/oder Aufstandsbereich (27; 29) für eine Beschwerungstasche (14; 20; 21; 22) aufweist.

11. Speicherbehälter (1) nach Anspruch 9 oder 10, **dadurch gekennzeichnet, dass** im Kopplungsbereich (6, 7) ein mittels elektrischer Bestromung aktivierbares Schweißelement (24) oder ein Aufnahmebereich für ein Schweißelement (24) vorgesehen ist.

12. Speicherbehälter (1) nach einem der vorhergehenden Ansprüche, **dadurch gekennzeichnet, dass** das Modul (2) in einem Spritzgussverfahren oder mittels Rotationsformen hergestellt ist.

13. Speicherbehälter (1) nach einem der vorhergehenden Ansprüche, **dadurch gekennzeichnet, dass** das Modul (2) aus PP, PEHD, PERT, PVC, PVDF, GFK oder PA hergestellt ist.
